Europäisches Patentamt

European Patent Office

Office européen des brevets

(19)

(11) EP 1 688 661 A1

(12) EUROPEAN PATENT APPLICATION
published in accordance with Art. 158(3) EPC

(43) Date of publication:
09.08.2006 Bulletin 2006/32

(51) Int Cl.:
F21S 2/00 (2006.01)    F21V 8/00 (2006.01)

(21) Application number: 04818876.7

(22) Date of filing: 12.11.2004

(86) International application number:
PCT/JP2004/016873

(87) International publication number:
WO 2005/050085 (02.06.2005 Gazette 2005/22)

(84) Designated Contracting States:
AT BE BG CH CY CZ DE DK EE ES FI FR GB GR
HU IE IS IT LI LU MC NL PL PT RO SE SI SK TR

(30) Priority: 20.11.2003 JP 2003391497

(71) Applicant: OMRON CORPORATION
Kyoto-shi, Kyoto 600-8530 (JP)

(72) Inventors:
• SHINOHARA, M.
Omron Corp.
801, Minamifudodo-cho
Kyoto-shi, Kyoto 600-8530 (JP)

• HIROTA, K.
Omron Corp.
801, Minamifudodo-cho
Kyoto-shi, Kyoto 600-8530 (JP)

(74) Representative: Weihs, Bruno Konrad et al
Osha Liang
121, Avenue des Champs Elysées
75008 Paris (FR)

(54) **SURFACE LIGHT SOURCE UNIT AND DEVICE USING THE UNIT**

(57)    In use for image display in liquid-crystal displays, etc., glitter and unevenness in brightness in a screen are suppressed.

A surface light source equipment comprising a light emission part 22, in which LED or the like is used, and a light conductive plate 23 that conducts a light outgoing from the light emission part 22 to spread the same over a whole light outgoing surface, wherein a multiplicity of deflection patterns 34 are provided on a back surface of the light conductive plate 23 and a light in the light conductive plate 23 is reflected by the deflection patterns 34 to outgo from the light outgoing surface of the light conductive plate 23.

Here, giving a thought to polar coordinates, of which an origin corresponds to a central point set in the vicinity of one corner of the light conductive plate, an arrangement point $(Rm, \theta m)$ of the deflection patterns is represented by the following formula

$$Rm = Rm{-}1 + (1/Rm{-}1)$$

$$\theta m = \theta m{-}1 + 137.5°$$

(however, $Ro > 0$).

Figure 14.

**Description**

[Technical Field]

The present invention relates to a surface light source equipment and an apparatus using the same, and more particular, to a surface light source equipment used as a backlight or a front light for image display units, lighting fitting, etc. Also, the invention relates to an apparatus using the surface light source equipment.

[Background Art]

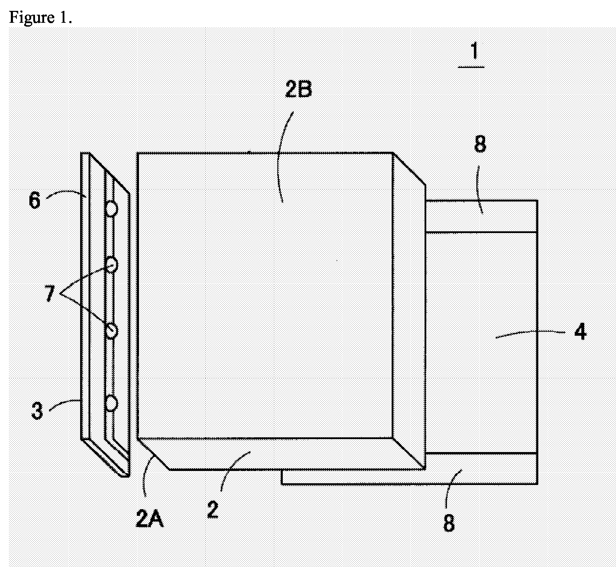

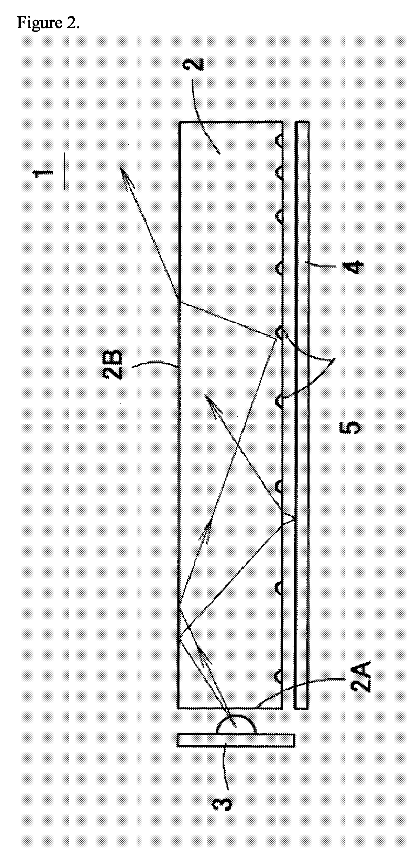

Figs. 1 and 2 are an exploded perspective view and a cross sectional view showing a surface light source equipment having a general construction. The surface light source equipment 1 is uses as a back light, and comprises a light conductive plate 2 that confines a light, a light emission part 3, and a reflection plate 4. The light conductive plate 2 is formed from a transparent resin, such as polycarbonate resin, methacrylic resin, etc., having a high refractive index. Diffusion patterns 5 are formed on a lower surface of the light conductive plate 2 by means of relief processing, dot printing of diffusion and reflection ink, etc. The light emission part 3 comprises a plurality of LEDs (light emitting diode) 7 mounted on a circuit board 6, and is opposed to a side (a light incident surface 2A) of the light conductive plate 2. The reflection plate 4 is formed from a white resin sheet and stuck to the lower surface of the light conductive plate 2 by means of a double tape 8.

With the surface light source equipment 1, a light outgoing from the light emission part 3 and conducted into the light conductive plate 2 from the light incident surface 2A advances while repeating total reflection on upper (a light outgoing surface 2B) and lower surfaces of the light conductive plate 2 as shown in Fig. 2. When being made incident upon the diffusion patterns 5, the light is diffused and reflected, and when being made incident toward the light outgoing surface 2B at a smaller angle than a critical angle of total reflection, the light outgoes outside from the light outgoing surface 2B. That is, with such surface light source equipment 1, the diffusion patterns act as quasi-light sources, and collect to make a surface light source.

The surface light source equipment 1 having a construction shown in Fig. 1 is simple in construction but lower in light efficiency due to its construction and so can cause only about 20 % of a light outgoing from the LEDs 7 to outgo from the light outgoing surface 2B of the light conductive plate 2. Also, since the light emission part 3 mounting thereon a plurality of LEDs 7 is used, miniaturization of the light emission part 3 is difficult and the surface light source equipment 1 cannot be reduced in power consumption.

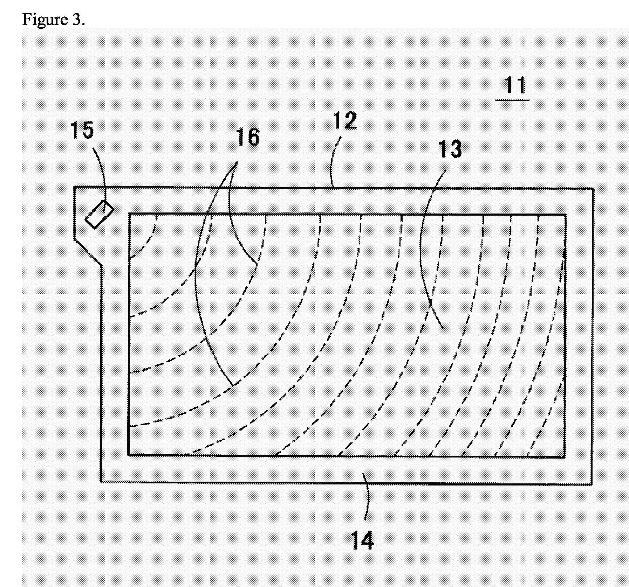

Hereupon, there has been proposed a surface light source equipment 11 constructed as shown in Fig. 3 to use a single LED. Provided on a light conductive plate 12 used in the surface light source equipment 11 is a non-light emission region 14 around a rectangular-shaped light emission region 13 used as a light source. A single light emission part 15 in the form of a point light source to use a LED is received at an end of a short side of the substantially rectangular-shaped light conductive plate 12 and outside (the non-light emission region 14) the light emission region 13. Also, a multiplicity of deflection patterns 16 are formed on a back surface of the light conductive plate 12 to be concentric round the light emission part 15. Intervals of the deflection patterns 16 are relatively large on a side close to the light emission part 15 and small as they are spaced from the light emission part 15, whereby surface brightness in the light emission region 13 is made constant. Such related art is disclosed in, for example, Patent Document 1 (JP-A-2001-243822).

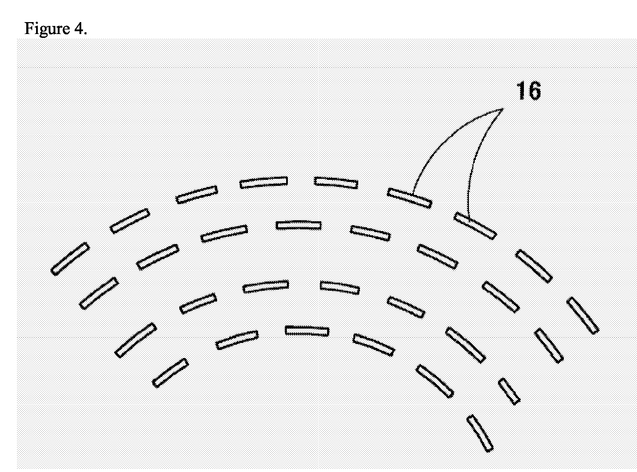

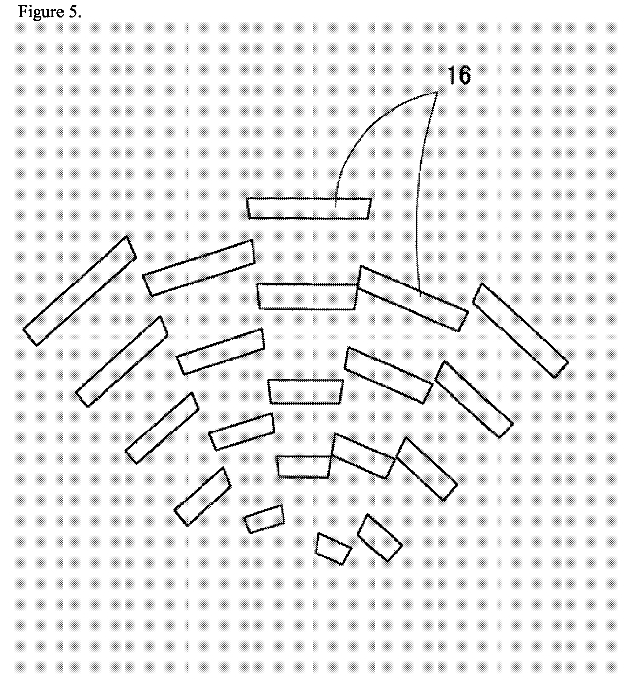

The deflection patterns 16 are arranged evenly in the surface light source equipment 11 of a point light source type shown in Fig. 3 in two methods. Figs. 4 and 5 show the pattern arrangements. The respective deflection patterns 16 shown in Fig. 4 have substantially the same length in circumferential directions, are arranged at constant intervals in circumferential directions, and arranged also at constant intervals in radial directions. Also, the deflection patterns 16 shown in Fig. 5 are arranged every predetermined angle in circumferential directions, and the respective deflection patterns 16 have lengths corresponding to distances from a center point (a light source position).

When a liquid-crystal display panel is overlapped on the surface light source equipment 11 and observation is made from a display surface side of the liquid-crystal display panel, however, glitter is generated on a screen of the liquid-crystal display panel. That is, when observation is made on the screen of the liquid-crystal display panel, pixels glitter red, blue, green according to locations on the screen, and generate a glittering phenomenon (glitter) to deteriorate the liquid-crystal display panel in image quality. In particular, such glitter becomes conspicuous as a pixel pitch becomes minute. Also, unevenness in brightness is seen in the light emission region 13 of the surface light source equipment 11.

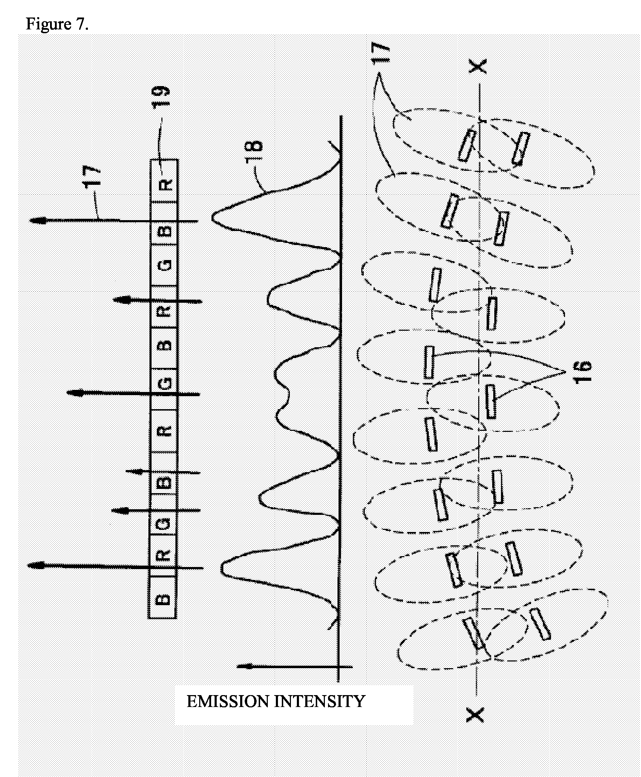

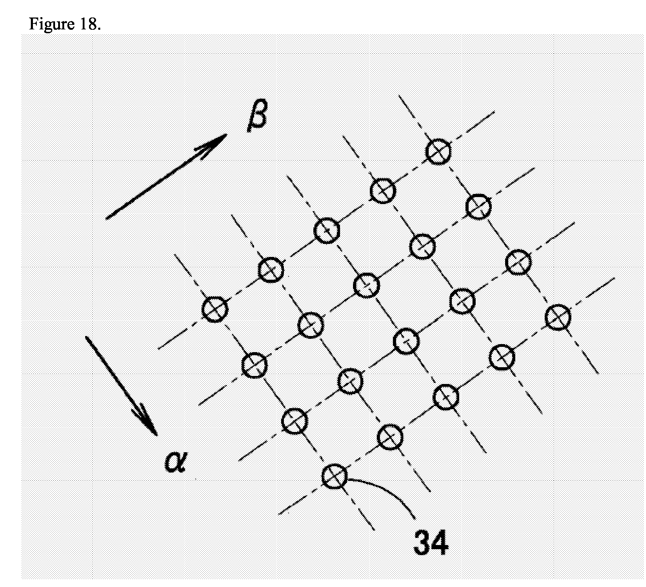

The cause for generation of such glitter and unevenness in brightness is thought in the following manner. For example, with a pattern arrangement shown in Fig. 4, when only a line in a circumferential direction is taken out and observed, the deflection patterns 16 are arranged substantially periodically. Also, intervals of arcuate lines, along which the deflection patterns 16 are arranged, are constant. When the whole deflection patterns 16 are observed two-dimensionally, the deflection patterns 16 are not aligned periodically but arranged randomly. Therefore, assuming that a directional angle of a light 17 outgoing from the surface light source equipment 11 has a characteristic such that it is large in a radial direction r, which connects between a light outgoing point (deflection pattern 16) and the light emission part 15, and small in a circumferential direction θ, spread of the light 17 reflected by the pattern arrangement shown in Fig. 4 to outgo from the surface light source equipment 11 is indicated by broken lines shown in Fig. 7. As found seeing the spread of the light 17 shown in Fig. 7, the light 17 overlaps much in some regions and little in some regions such that regions overlapping much are large in emission intensity and regions overlapping less are small in emission intensity as indicated by an emission intensity characteristic 18 along a line X-X shown in Fig. 17. As shown in Fig. 17, when pixel pitches of a liquid-crystal display panel 19 become equal to or smaller than intervals of large and small intensities in the emission intensity characteristic 18, there is generated a phenomenon that a light 17 having a large emission intensity transmits red pixels R and a light 17 having a small emission intensity transmits green pixels B and blue pixels B, so that the pixels are seen to become red-colored, and in a further region, a light 17 having a large emission intensity transmits blue pixels B and a light 17 having a small emission intensity transmits green pixels B and red pixels R, so that the pixels are seen to become blue-colored, and therefore, pixels of respective colors do not emit light uniformly, so that it is thought that there is generated a phenomenon that the liquid-crystal display surface glitters.

Likewise, with a pattern arrangement shown in Fig. 5, deflection pattern 16 are arranged every predetermined angle in a circumferential direction but the deflection pattern 16 are arranged randomly in a radial direction, so that the pattern is not uniform as a whole. Therefore, also with the pattern arrangement shown in Fig. 5, glitter and unevenness in brightness are generated on a screen to lead to deterioration in image quality.

In addition, when the respective deflection pattern 16 are made small and intervals, at which the deflection pattern 16 are arranged, are made small, periods of variation in emission intensity can be made smaller than pixel pitches of a liquid-crystal display panel. However, such method is not practical since deflection pattern 16 are made further highly minute and manufacture of the deflection pattern 16 becomes difficult, so that the deflection pattern 16 become relatively large in form error and low in brightness.

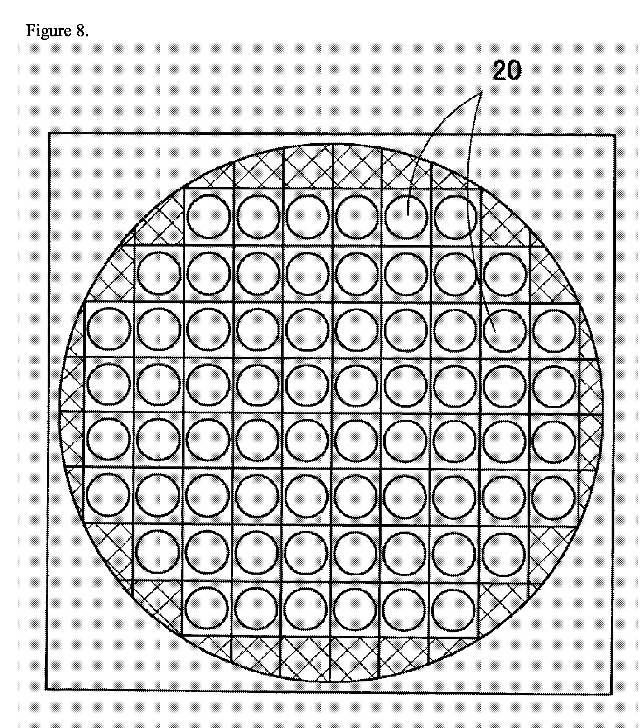

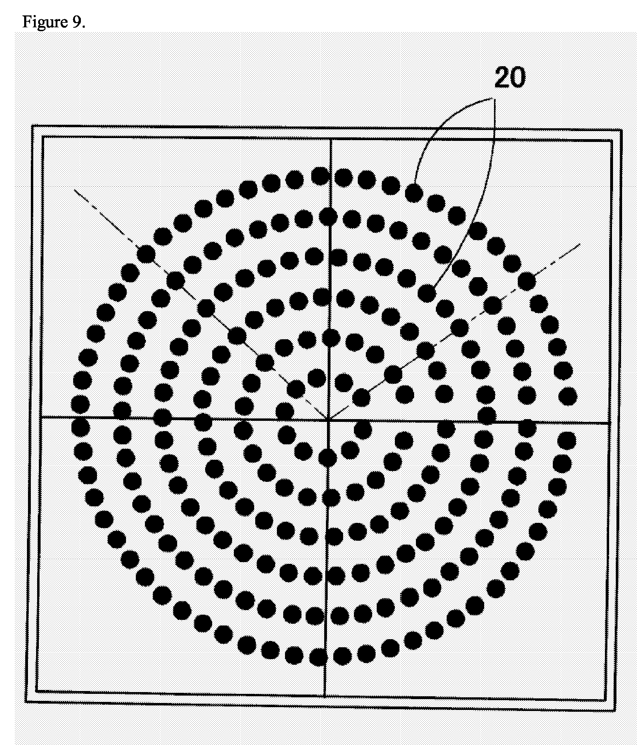

Subsequently, let consider usage of illuminating lamps and indicating lamps. Signal lamps of traffic signals or the like comprise a circular quasi-surface light source, in which a plurality of light emission parts in the form of a point light source such as LED, etc. are aligned. With such quasi-surface light source, there are a method, in which light emission parts 20 are arranged in a latticed manner in a circle as shown in Fig. 8, and a method, in which light emission parts 20 are arranged at constant intervals in circumferential directions as shown in Fig. 9.

With the arrangement shown in Fig. 8, however, clearances are generated in a peripheral region in the circle and a space is wasted. Also, with the arrangement shown in Fig. 9, the light emission parts 20 are made angularly even completely in a specific direction, so that light emission is conspicuous in the specific direction, not uniform and not visually beautiful. In this manner, with conventional illuminating lamps and indicating lamps, it is difficult to arrange the light emission parts 20 uniform in, for example, a circle and to manufacture lamps, in which emission points are aligned uniformly and visually beautifully.

[Patent Document 1] JP-A-2001-243822

[Disclosure of the Invention]

[Problems that the Invention is to Solve]

The invention has been thought of in view of the technical background and has its object to provide a surface light source equipment, in which glitter and unevenness in brightness in a screen can be suppressed in case of being used for image display in liquid-crystal displays, etc.

Also, it is a further object of the invention to provide a surface light source equipment, in which respective light emission parts can be arranged uniform as a whole in case of fabricating a circular-shaped surface light source equipment.

[Means for Solving the Problems]

The invention provides a first surface light source equipment comprising a plurality of light sources arranged on a two-dimensional or a three-dimensional surface, wherein the light sources in respective positions are arranged regularly in two directions, and the direction of arrangement and intervals of the light sources are gradually varied according to movements along the direction of arrangement.

In an embodiment of the first surface light source equipment of the invention, a connection line connecting between the light sources is rotationally symmetric round a certain point, the direction of arrangement and intervals of the light sources are gradually varied according to a distance from the central point, and two directions of arrangement in a position among respective points are non-symmetrical about a line segment, which connects between the position and the central point.

The invention provides a second surface light source equipment comprising a plurality of light sources arranged on a two-dimensional or a three-dimensional surface, wherein the light sources in respective positions are arranged regularly in two directions, a connection line connecting between the light sources in a direction of arrangement makes a spiral round a certain point, and 0.55 < Na/Nb < 0.75 is met where Na and Nb (however, Na < Nb) indicate numbers of two kinds of spirals, which are different in sense.

In an embodiment of the first surface light source equipment of the invention, the number of the light sources arranged per unit area is substantially constant irrespective of a point.

In an embodiment of the second surface light source equipment of the invention, the number of the light sources arranged per unit area is substantially constant irrespective of a point.

In a further embodiment of the first surface light source equipment of the invention, the light sources are arranged in a circular region.

In a further embodiment of the second surface light source equipment of the invention, the light sources are arranged in a circular region.

A still further embodiment of the first surface light source equipment of the invention further comprises a light conductive plate, by which light introduced from the actual light source is spread over substantially a whole of a light outgoing surface to outgo from the light outgoing surface, and a quasi-light source, which can be regarded as the light sources, is arranged on the light conductive plate.

The embodiment described above further comprises a plurality of patterns provided on surface of the light conductive plate opposite to the light outgoing surface to reflect a light conducted in the light conductive plate, and the patterns may form the quasi-light source. Alternatively, the actual light source may be small as compared with the light conductive plate, and the quasi-light source may be shaped to be long in one direction, and arranged to be concentric about the central point of the light sources as arranged.

A still further embodiment of the second surface light source equipment of the invention further comprises a light conductive plate, by which light introduced from the actual light source is spread over substantially a whole of a light outgoing surface to outgo from the light outgoing surface, and a quasi-light source, which can be regarded as the light sources, is arranged on the light conductive plate.

The embodiment described above further comprises a plurality of patterns provided on a surface of the light conductive plate opposite to the light outgoing surface to reflect a light conducted in the light conductive plate, and the patterns may form the quasi-light source. Alternatively, the actual light source may be small as compared with the light conductive plate, and the quasi-light source may be shaped to be long in one direction, and arranged to be concentric about the central point of the light sources as arranged.

The invention provides a third surface light source equipment comprising a plurality of light sources arranged two-dimensionally, wherein a m-th light source (m = 1, 2, ...) is arranged at a point (Rm, θm) or in the vicinity thereof, the point being determined by

$$Rm \ = \ Rm{-}1 \ + \ (1/Rm{-}1)$$

$$\theta m \ = \theta m{-}1 \ + \ \theta g$$

$$\theta g \ \approx \ 137.5°$$

where R indicates a distance from a certain point, θ indicates an angle measured from a certain direction passing through the point, and coordinates (R, θ) represent a position of the light source.

However, θo assumes an optional value. Also, Ro assumes an optional, positive value.

In addition, the constituent elements, described above, of the invention can be combined together as far as possible.

[Effect of the Invention]

The invention proposes a new arrangement of light sources (actual light sources or quasi-light sources) in a surface light source equipment. That is, the invention provides a constitution characterized in the first to third surface light source equipments, so that it is possible to arrange light sources without deviation. Consequently, even when being used together with a liquid-crystal display panel, glitter becomes hard to generate in a screen, thus enabling suppressing deterioration in image quality. Also, it is possible to decrease unevenness in brightness in a light emission surface of the surface light source equipment.

In use for signal lamps, illumination, etc., and in particular, in the case where light sources are arranged circularly, clearances become hard to generate between a light emission region in design and a region, in which light sources are arranged. Also, there is not caused a situation, in which light emission points are made contiguous together in a specific direction to cause deviation in the light emission points. Therefore, in use for signal lamps, illumination, etc., a plurality of light sources are used to obtain a light emission surface, which involves no unevenness.

[Brief Description of the Drawings]

[Fig. 1] Fig. 1 is an exploded perspective view showing a surface light source equipment having a general construction.
[Fig. 2] Fig. 2 is a cross sectional view showing the surface light source equipment shown in Fig. 1.
[Fig. 3] Fig. 3 is a plan view showing a conventional surface light source equipment having a further construction.
[Fig. 4 ] Fig. 4 is a view showing an example of a pattern arrangement of deflection patterns in the surface light source equipment shown in Fig. 3.
[Fig. 5] Fig. 5 is a view showing a further example of a pattern arrangement of deflection patterns in the surface light source equipment shown in Fig. 3.

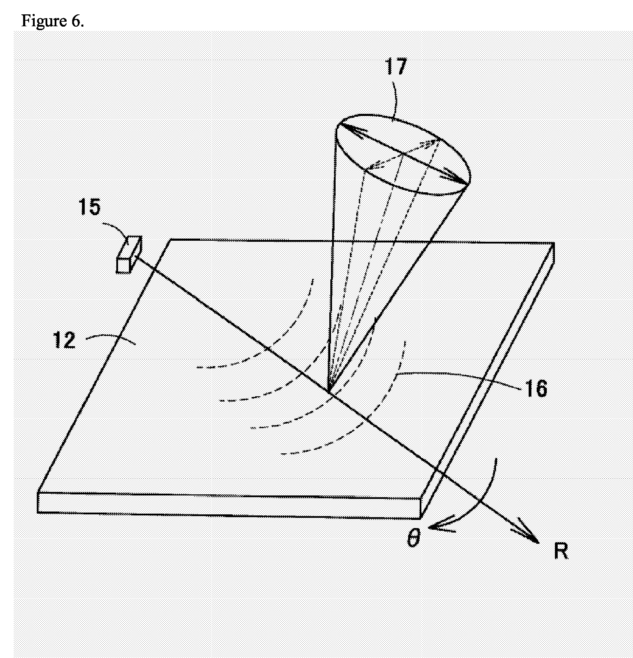

[Fig. 6] Fig. 6 is a view showing a directional angle of a light outgoing from a surface light source equipment.
[Fig. 7] Fig. 7 is a view illustrating the reason why glitter of a light is generated in a surface light source equipment having the pattern arrangement shown in Fig. 4.
[Fig. 8] Fig. 8 is a view showing an example of light emission parts arranged circularly.
[Fig. 9] Fig. 9 is a view showing a further example of light emission parts arranged circularly.
[Fig. 10] Fig. 10 is an exploded perspective view showing a construction of a surface light source equipment according to Embodiment 1 of the invention.
[Fig. 11] Fig. 11 is a cross sectional view showing the surface light source equipment shown in Fig. 10.
[Fig. 12] Fig. 12 is a schematic view showing a back surface of a light conductive plate in the surface light source equipment according to Embodiment 1.
[Fig. 13] Fig. 13 is a cross sectional view showing a construction of a light emission part.
[Fig. 14] Fig. 14 is a view showing an arrangement of deflection patterns on the light conductive plate in Embodiment 1.
[Fig. 15] Fig. 15 is a perspective view showing, in enlarged scale, one deflection pattern.
[Fig. 16] Fig. 16 is a view illustrating the relationship between a lengthwise dimension of a deflection pattern and a distance from a light emission part.
[Fig. 17] Fig. 17 is a view showing a latticed arrangement of deflection patterns.
[Fig. 18] Fig. 18 is a view showing a rhombic arrangement of deflection patterns.
[Fig. 19] Fig. 19 is a view showing a fundamental pattern that determines points, in which the deflection patterns in Embodiment 1 are arranged.
[Fig. 20] Fig. 20 is a view showing a fundamental pattern in the case where clockwise spirals and counterclockwise spirals are the same in number.

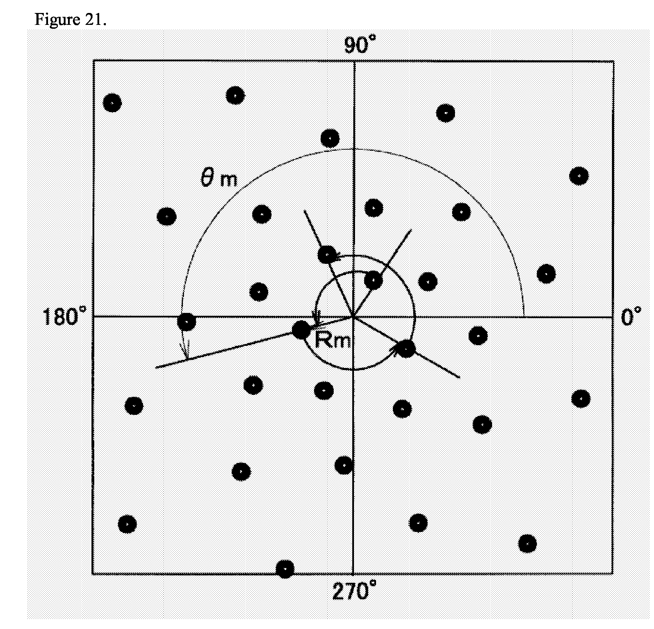

[Fig. 21] Fig. 21 is a view illustrating the definition of a point $(Rm, \theta m)$, in which a m-th deflection pattern is arranged.
[Fig. 22] Fig. 22 is a view showing an arrangement pattern in case of $\theta g = 138°$.
[Fig. 23] Fig. 23 is a view showing a distribution of arrangement points in case of a parameter $Cm = 1/Rm-1$.
[Fig. 24] Fig. 24 is a view showing a distribution of arrangement points in case of a parameter $Cm = 1/(Rm-1)^2$.
[Fig. 25] Fig. 25 is a view illustrating a way to determine a connection line.
[Fig. 26] Fig. 26 is a view showing, in enlarged scale, a part of an arrangement of conventional deflection patterns.
[Fig. 27] Fig. 27 is a view showing, in enlarged scale, a part of an arrangement of the deflection patterns in Embodiment 1.
[Fig. 28] Fig. 28 is a view illustrating contrast of light intensity on a back light, in which the conventional deflection patterns shown in Fig. 26 are used, and contrast of light intensity on a back light, in which the deflection patterns, according to the embodiment, shown in Fig. 27 are used.
[Fig. 29] Fig. 29 is a view showing that region of a fundamental pattern, which is used for the light conductive plate shown in Fig. 14.
[Fig. 30] Fig. 30 is a schematic plan view showing a surface light source equipment according to Embodiment 2 of the invention.
[Fig. 31] Fig. 31 is a cross sectional view showing a surface light source equipment according to Embodiment 3 of the invention.
[Fig. 32] Fig. 32 is a view showing positions, in which deflection patterns in the surface light source equipment shown in Fig. 31 are arranged.

[Fig. 33] Fig. 33 is a front view showing a surface light source equipment according to Embodiment 4 of the invention.

[Fig. 34] Fig. 34 is a perspective view showing a surface light source equipment according to Embodiment 5 of the invention.

[Fig. 35] Fig. 35 is a schematic cross sectional view showing a liquid-crystal display, in which the surface light source equipment according to the invention is used.

[Fig. 36] Fig. 36 is a perspective view showing a portable telephone comprising the liquid-crystal display according to the invention.

[Fig. 37] Fig. 37 is a perspective view showing a portable information terminal comprising the liquid-crystal display according to the invention.

[Fig. 38] Fig. 38 is a front view showing an illumination board, in which the surface light source equipment according to the invention is used.

[Fig. 39] Fig. 39 is a front view showing a signal, in which the surface light source equipment according to the invention is used.

[Description of Reference Numerals and Signs]

21:      surface light source equipment
22:      light emission part
23:      light conductive plate
25:      surface emission region
34:      deflection pattern
34A:    reflection surface
35:      clockwise spiral
36:      counterclockwise spiral
40:      light
41:      arrangement point

[Best Mode for Carrying Out the Invention]

Embodiments of the invention will be described below with reference to the accompanying drawings.

[Embodiment 1]

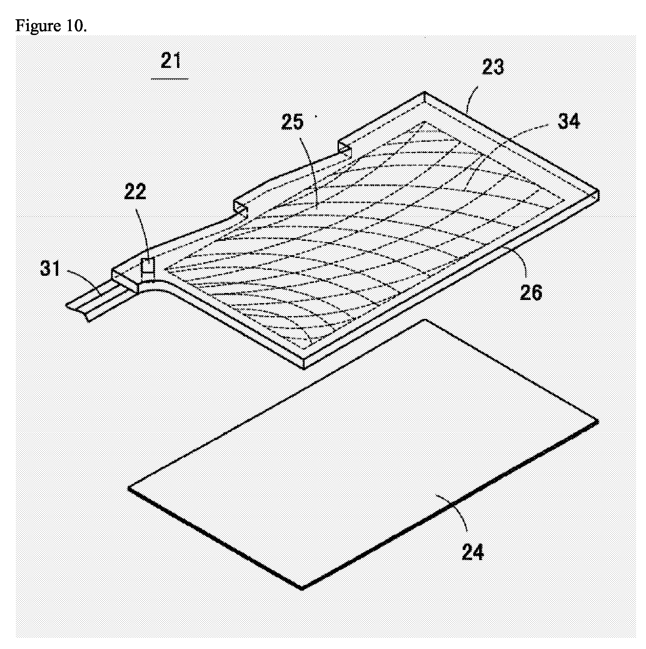

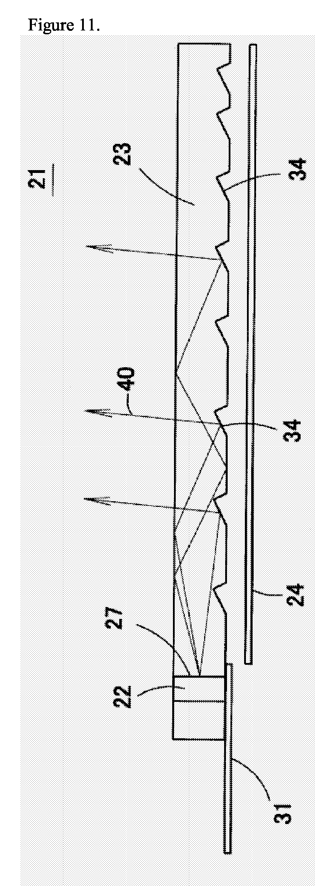

Fig. 10 is an exploded perspective view showing a construction of a surface light source equipment 21 according to Embodiment 1 of the invention, and Fig. 11 is a cross sectional view showing the construction. The surface light source equipment 21 is used as a back light of a liquid-crystal display panel, and comprises a light emission part 22 in the form of a point light source, a light conductive plate 23, and a reflection sheet 24. The light emission part 22 is embedded in a corner of the light conductive plate 23. The reflection sheet 24 is made of aluminum foil, a white resin sheet, etc. to be arranged in opposition to a back surface of the light conductive plate 23.

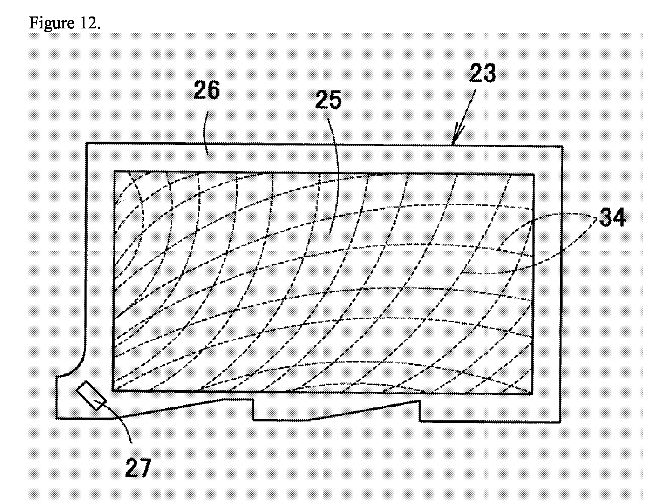

The light conductive plate 23 is formed from a transparent resin, such as polycarbonate resin, acrylic resin, methacrylic resin, having a high refractive index, and glass to be in the form of a rectangular flat plate. Fig. 12 is a schematic view showing the back surface of the light conductive plate 23. A non-emission region 26 is formed around a rectangular-shaped plane emission region 25, which forms a substantial plane emission source, on the back surface of the light conductive plate 23, and a hole 27, in which the light emission part 22 is fitted, is formed at an end of a short side of the rectangular-shaped light conductive plate 23 and outside the plane emission region 25 (that is, the non-emission region 26). The light emission part 22 comprises a resin-molded LED chip, and is mounted on a film circuit board (FPC) 31, which supplies electric power to the light emission part 22, to be inserted into the hole 27 on the light conductive plate 23.

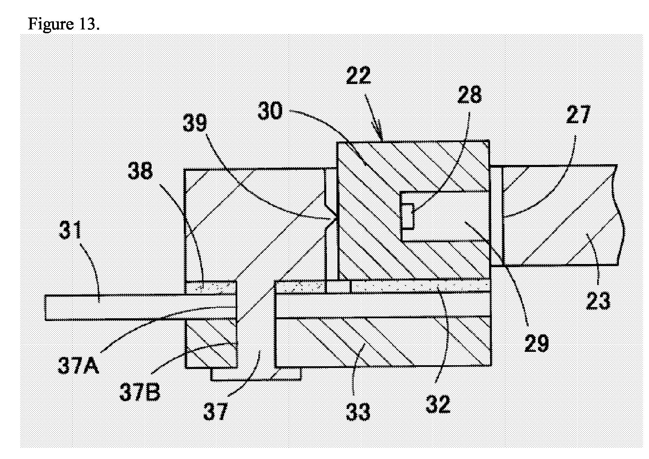

Fig. 13 is a cross sectional view showing a construction of the light emission part 22. The light emission part 22 comprises a LED chip 28 sealed in a transparent resin 29 and having surfaces thereof except a front surface covered by a white transparent resin 30. The light emission part 22 is mounted on a film circuit board 31 to be fixed thereto by solder 32. Further, the film circuit board 31 is fixed to a reinforcement plate 33 made of a glass epoxy resin. The hole 27 for accommodation of the light emission part 22 extends vertically through the corner of the light conductive plate 23, and a positioning pin 37 projects from a lower surface of the light conductive plate 23 in the vicinity of the hole. On the other hand, through-holes 37A, 37B for passage of the positioning pin 37 therethrough are formed on the film circuit board 31 and the reinforcement plate 33.

Thus, an ultraviolet hardening adhesive (a thermosetting type adhesive will do) 38 is coated on a lower surface of the light conductive plate 23 in a periphery of a base of the positioning pin 37, the positioning pin 37 is inserted through the through-holes 37A, 37B of the film circuit board 31 and the reinforcement plate 33, a CCD camera or the like is used to perform positioning of a center of the light conductive plate 23 in a thickness-wise direction and an emission center of the light emission part 22, ultraviolet rays are irradiated to harden the ultraviolet hardening adhesive 38 to bond the light conductive plate 23 and the light emission part 22 to each other, and the positioning pin 37 is thermally caulked to the reinforcement plate 33.

At this time, as shown in Fig. 13, positioning of the center of the light emission part 22 may be performed by means of a projection 39 provided on an inner surface of the hole 27 of the light conductive plate 23 (a back surface side, a front surface side, or both thereof of the light emission part 22 will do) . Also, although not shown, positioning of a center of the light conductive plate 23 and the center of the light emission part 22 may be performed by means of a jig, which comprises a step for positioning of an upper surface of the light conductive plate 23 and an upper surface of the light emission part 22, in a state, in which the light conductive plate 23 and the light emission part 22 are reversed up and down.

In addition, a glass epoxy circuit board and a lead frame may be used in place of the film circuit board 31. Also, in case of using two or more LED chips, a plurality of LED chips may be collected in one point to provide for a point light source. Also, the light emission part 22 may be formed by insert-molding a LED chip directly into the light conductive plate 23, or may be arranged outside the light conductive plate 23 (a position opposed to an outer peripheral surface of the light conductive plate 23).

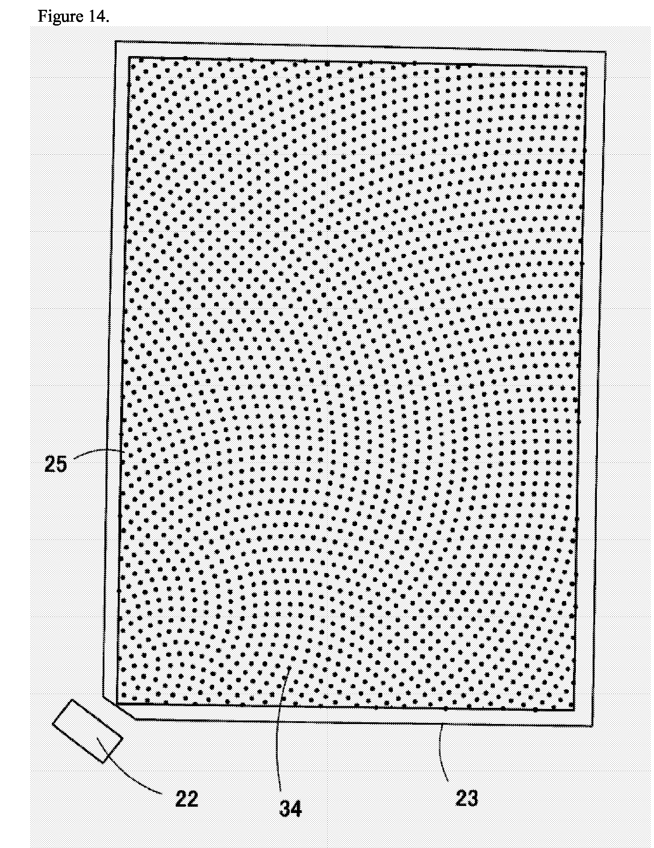

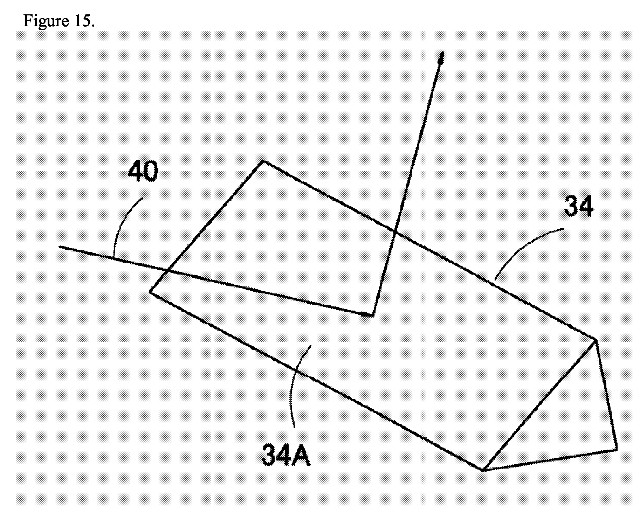

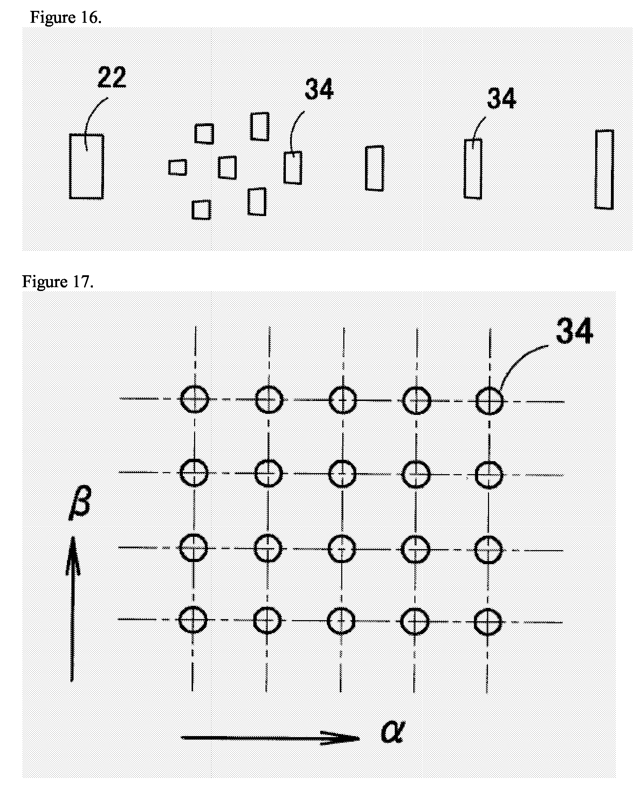

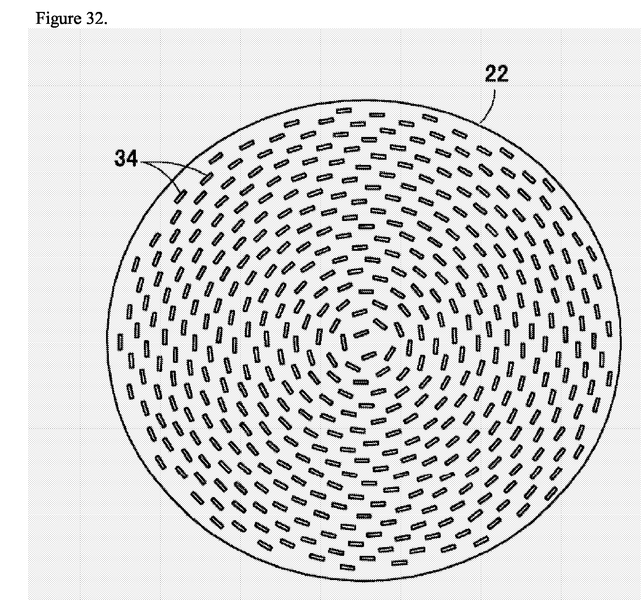

Fig. 14 is an enlarged view showing an arrangement of a plurality of, or a multiplicity of deflection patterns 34 formed on the plane emission region 25 on a back surface of the light conductive plate 23. While positions of the deflection patterns 34 are represented by dots in Fig. 14, the deflection patterns 34 are actually formed by recessing the back surface of the light emission part 22 in the form of a triangular groove or a semi-circular groove as shown in Fig. 15 (see Fig. 32). Also, the respective deflection patterns 34 are arranged so that a lengthwise direction is perpendicular to a direction, which connects between a position thereof and the light emission part 22, and the respective deflection patterns 34 are arranged in a concentric manner. Further, as schematically shown in Fig. 16, the respective deflection patterns 34 are small in a lengthwise dimension in the neighborhood of the light emission part 22 and large in a lengthwise dimension as they become distant from the light emission part 22, and the number (density) of the deflection patterns arranged per unit area in the plane emission region 25 is constant anywhere.

Thus, with such surface light source equipment 21, a light 40 outgoing from the light emission part 22 is made incident into the interior of the light conductive plate 23 from a light incident surface of the light conductive plate 23 to propagate in the light conductive plate 23 while repeating reflection between front and back surfaces of the light conductive plate 23 as shown in Fig. 11. When the light 40 is made incident upon reflection surfaces 34A of the deflection patterns 34 in such propagation as shown in Fig. 15, the light 40 made incident upon the reflection surfaces 34A is total-reflected toward a surface (a light outgoing surface) of the light conductive plate 23 to outgo in a direction substantially perpendicular to the light outgoing surface of the light conductive plate 23. Also, after being total-reflected by the reflection surfaces 34A, the light 40 total-reflected by the surface of the light conductive plate 23 and returned into the light conductive plate 23 advances in the same direction as that, in which the light 40 before being made incident upon the deflection patterns 34 advances, as viewed in a direction perpendicular to the surface of the light conductive plate 23. Accordingly, light conducting directions in respective points in the light conductive plate 23 are oriented every point in predetermined directions, and the light 40 outgoing from the light emission part 22 advances radially in the light conductive plate 23.

In addition, with some surface light source equipments of different types, a prism sheet is arranged in opposition to a surface of a light conductive plate, a light is caused to outgo from the surface of the light conductive plate in a direction substantially in parallel to the surface, and the light is deflected in a vertical direction by the prism sheet.

Subsequently, an explanation will be given to a pattern of positions, in which the deflection patterns 34 are arranged. First, Figs. 17 and 18 show latticed or rhombic arrangements for the sake of comparison. Fig. 17 shows the deflection patterns 34 arranged in a latticed manner, and Fig. 18 shows the deflection patterns 34 arranged in a rhombic manner. With such arrangements, a surface, on which the deflection patterns 34 are arranged, includes two vectors $\alpha$, $\beta$ to determine an arrangement of the deflection patterns 34, so that it is possible to uniformly arrange the deflection patterns 34 irrespective of points. In contrast, with the concentric arrangement as shown in Fig. 4, vectors, which determines an arrangement of the deflection patterns 16, are present only in circumferential directions, and with the concentric arrangement as shown in Fig. 5, vectors, which determines an arrangement of the deflection patterns 16, are present only in radial directions, so that it is not possible to uniformize an arrangement of the deflection patterns 16 as a whole.

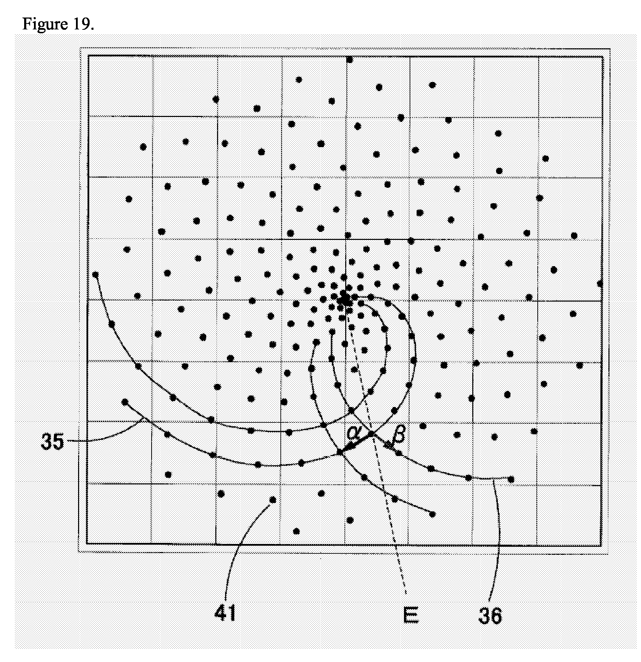

Fig. 19 shows a fundamental pattern to determine arrangement points, on which the deflection patterns 34 in the invention are arranged. In the invention, two directions and periods are provided for points of arrangement by gradually changing directions and periods between points of arrangement with a distance from a central point (position of the light emission part 22). Such directions and periods are continuously and gradually changed with a distance from the central point. Consequently, an arrangement with less deflection is enabled except a neighborhood of the central point. In addition, in order to have a feature of such a pattern demonstrating itself, points, in which the deflection patterns 34 are arranged, is needed to be 20 or more in number, and desirably 50 or more.

A fundamental pattern as shown in Fig. 19 will be described in detail. Arrangement points 41, on which the deflection patterns 34 are arranged, posses two directions connecting between specific points of arrangement and periods (distances between points of arrangement) for the respective directions. The two directions and periods are gradually changed with a distance from the central point. In addition, the directions between points of arrangement can be represented by directions of vectors $\alpha$, $\beta$, which connect between two points of arrangement, as shown in Fig. 19, and periods in the respective directions can be represented by lengths of the vectors $\alpha$, $\beta$.

When points of arrangement are connected to each other in the two directions, a plurality of clockwise spirals 35 and counterclockwise spirals 36 are obtained. The plurality of spirals 35 thus obtained are positioned in rotational symmetry relative to the central point, and the respective spirals 35 assume a shape of the same curve. Likewise, the plurality of spirals 36 are positioned in rotational symmetry relative to the central point, and the respective spirals 36 assume a shape of the same curve. Since the spirals 35 and the spirals 36 are different in number from each other, however, they are non-symmetrical with respect to a line segment E, which connects between an intersection of them and the central point (in other words, two vectors $\alpha$, $\beta$ at the intersection are non-symmetrical with respect to the line segment E).

The number N of the clockwise spirals 35 and the counterclockwise spirals 36 can be represented by the following formula (1). However, the spirals 35 and the spirals 36 are different in value of exponent n in the formula (1) from each other, and consequently, different in number from each other.

[Formula 1]

For example, assuming exponent n = 7 for the spirals 35 and exponent n = 8 for the spirals 36, the respective numbers N (denoted by Na, Nb) of the spirals 35 and the spirals 36 are represented by the following formulae (2) and (3).

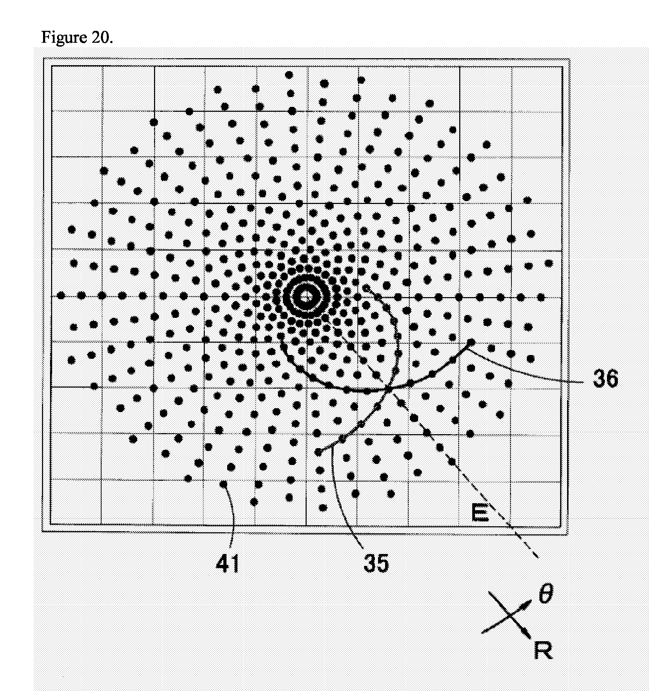

Fig. 20 shows a fundamental pattern in the case where the numbers Na and Nb of the clockwise spirals 35 and the counterclockwise spirals 36 are equal to each other (Na = Nb = 21). In the case where the numbers Na and Nb of the spirals 35 and the spirals 36 are equal to each other in this manner, the spirals 35 and the spirals 36 become symmetrical with respect to the line segment E, which passes through the intersection. With the spirals 35 and the spirals 36, which are mutually symmetrical, arrangement intervals in a circumferential direction $\theta$ are increased with a distance from the central point but arrangement intervals in a radial direction R are fixed anywhere. Accordingly, the numbers Na and Nb of the spirals 35 and the spirals 36 are equal to each other, arrangement intervals in the circumferential direction $\theta$ become far larger than arrangement intervals in the radial direction R with a distance from the central point, so that a dense arrangement in the radial direction R is resulted. That is, since the arrangement is dense in a certain direction but coarse in a certain direction, an even arrangement is not resulted. Therefore, in order to obtain an arrangement of less deviation as shown in Fig. 19, the spirals 35 and the spirals 36 should be determined so as to be different in number from each other.

Subsequently, an explanation will be given to a method of determining the fundamental pattern. Here, giving a thought in terms of polar coordinates $(R, \theta)$ with the central point as an origin, a point, in which a m-th deflection pattern 34 is represented by $(Rm, \theta m)$. An angle $\theta m$, at which the m-th deflection pattern 34 is arranged, is

$$\theta m = \theta m{-}1 + \theta g \qquad (m = 1, 2, ...) \qquad (4)$$

Here, $\theta g$ is represented as in the following formula (5). While $\theta_0 = 0°$, it does not matter whether $\theta_0$ is an optional value.

[Formula 3]

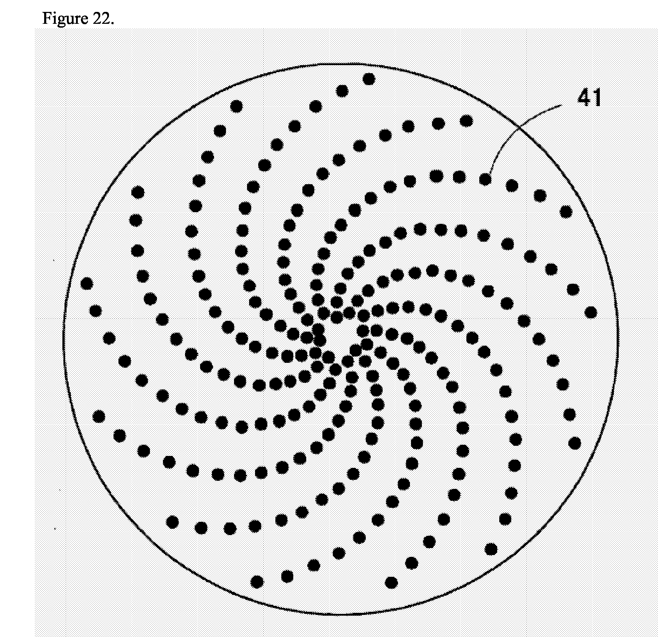

The formula (5) represents an angle obtained by dividing a circumference by the golden ratio, and $\theta g = 137.5°$. In addition, Fig. 22 represents an arrangement pattern in case of $\theta g = 138°$. It is seen from Fig. 22 that arrangement points 41 do not become even in distribution when a value of $\theta g$ is deviated slightly 0.5°.

Also, a distance Rm of the m-th deflection pattern 34 from the central point is

$$Rm = Rm{-}1 + Cm \qquad (m = 1, 2, ...) \qquad (6)$$

Here, while Ro = 1, it does not matter whether Ro assumes an optional value provided that Ro > 0.

A tendency in distribution of arrangement point density can be changed by varying a parameter Cm in the formula (6). The arrangement pattern shown in Fig. 19 assumes that the parameter Cm in the formula (6) is a constant value (a constant), and while the density is large in a central region, intervals between the arrangement points are gradually increased with a distance from the central point, and the arrangement points 41 are substantially uniform in density, the arrangement points are not uniform strictly speaking. Accordingly, in order to make the arrangement points 41 uniform in density, it is seen that it suffices to change the parameter Cm according to a distance from the central point. That is, it suffices to determine the parameter Cm so that the parameter is decreased with a distance Rm from the central point. Specifically, when the parameter Cm is determined according to the following formula (7), the distribution (the number of arrangement points per unit area) of the arrangement points 41 becomes constant in any region.

[Formula 4]

The deflection patterns 34 of the light conductive plate 23 shown in Fig. 14 present such arrangement pattern, which is uniform as a whole.

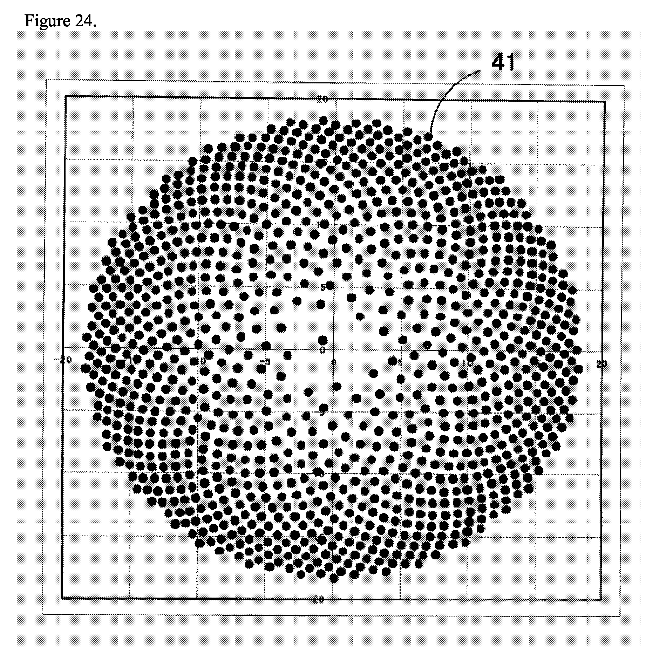

Also, when the parameter Cm is determined according to the following formula (8), arrangement points 41 become small in density in a central region and the arrangement points 41 are increased in density with a distance from the central point. The arrangement pattern at this time is shown in Fig. 24.

[Formula 5]

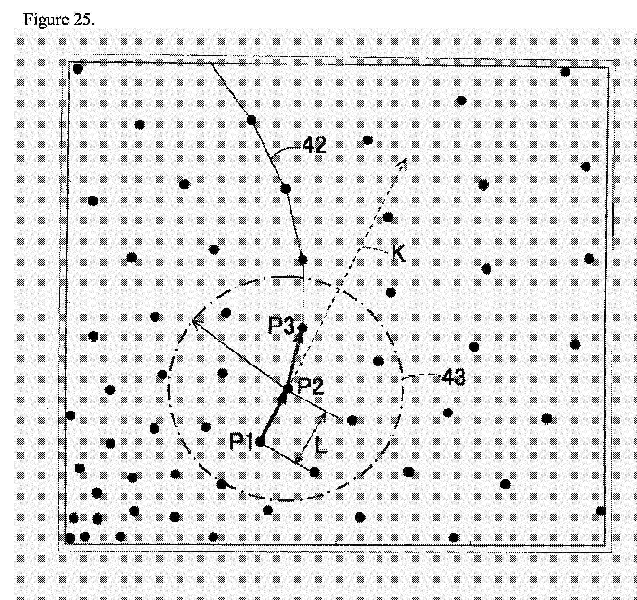

Subsequently, a connection line 42 connecting between arrangement points is defined. Fig. 25 is a view illustrating a way to define the connection line 42. Let assume that a line segment is drawn from an appropriately assumed starting point (arrangement point) P1 to an optional point P2 (arrangement point) in the vicinity thereof. When L denotes a distance between the points P1 and P2, a circle 43 having a radius 2L with the point P2 as a center is assumed, and P3 denotes a point closest to a line segment K, which is an extension of a line segment (P1P2), among points present in the circle 43. Likewise, assuming a circle 43 having a radius (p2P3)×2 with a point P3 as a center, P4 denotes a point closest to a line segment, which is an extension of a line segment (P2P3), among points present in the circle. By connecting such line segments consecutively, a connection line 42 can be determined for the arrangement points P1, P2, P3, ... In the invention, the connection line 42 thus determined makes a clockwise spiral 35 or a counterclockwise spiral 36.

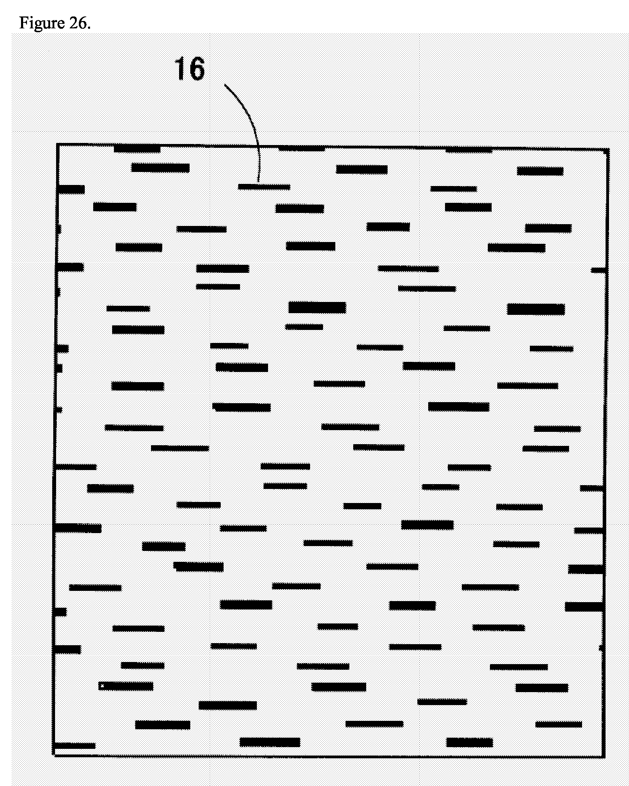

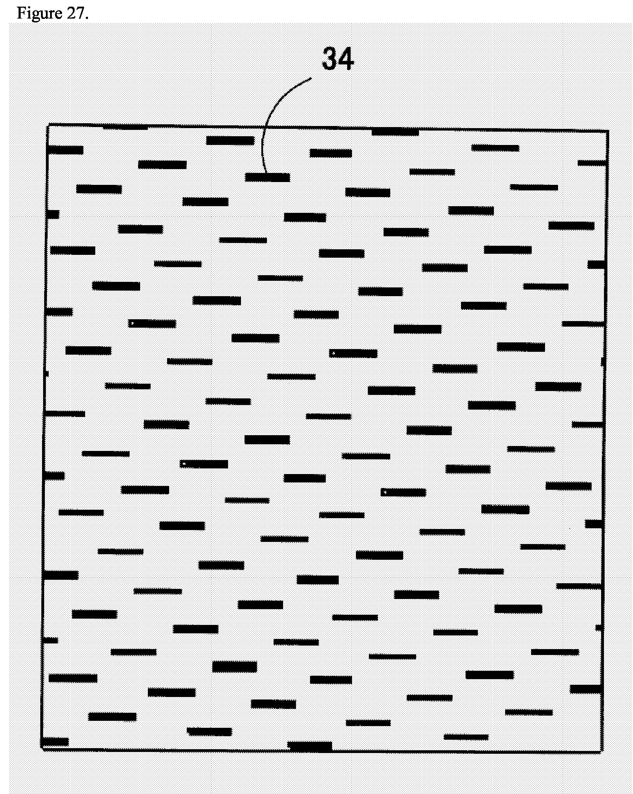

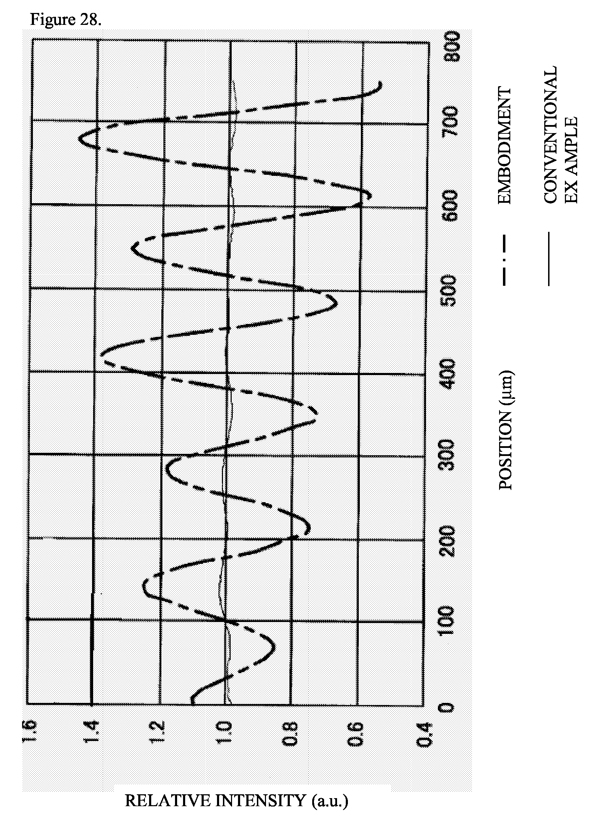

Fig. 26 is a view showing, in enlarged scale, a part of an arrangement of conventional deflection patterns 16, and Fig. 27 is a view showing, in enlarged scale, a part of an arrangement of deflection patterns 34 according to an embodiment of the invention. Also, Fig. 28 is a view illustrating contrast of light intensity on a back light, in which the conventional deflection patterns 16 shown in Fig. 26 are used, and contrast of light intensity on a back light, in which the deflection patterns 34, according to the embodiment, shown in Fig. 27 are used, an abscissa represents a position on the back light along one axial direction, and an ordinate represents a relative intensity of light. As seen from Fig. 27, contrast amounts to 45 % in the conventional pattern arrangement and strong or weak periods are present every 140 μm. Since pixels of respective colors R, G, B on a liquid-crystal display panel have a magnitude of 100 μm or less, periods of contrast in the conventional pattern arrangement are larger than a pixel period. Therefore, glitter is generated on a screen to bring about deterioration in image quality.

In contrast, with the pattern arrangement, according to the embodiment, in which the deflection patterns 34 are uniformly arranged, contrast is decreased to around 5 %. Therefore, with the pattern arrangement according to the embodiment, it is possible to decrease glitter on a screen and to prevent deterioration in image quality on a liquid-crystal display panel.

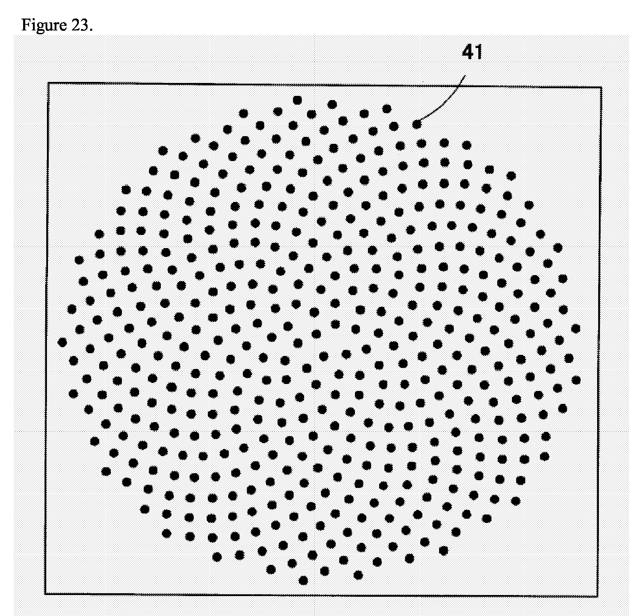

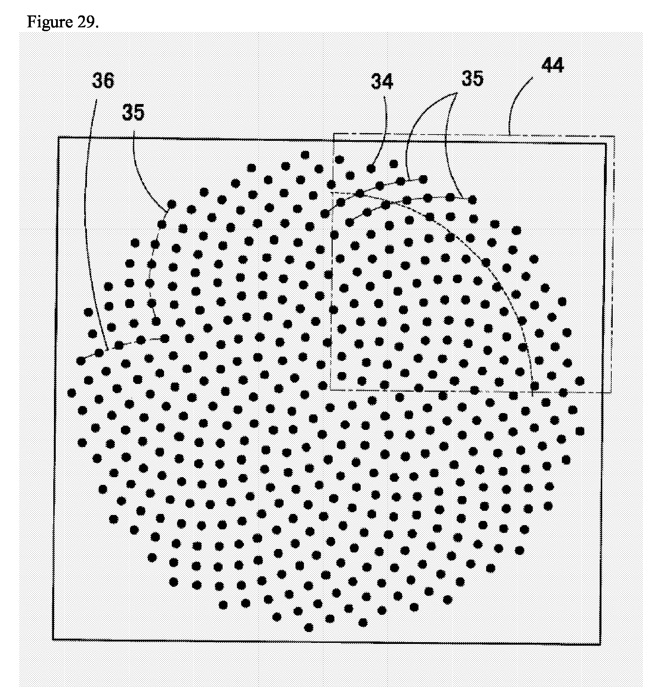

As shown in Fig. 14, while the arrangement pattern of the deflection patterns 34 in the invention is constituted with the arrangement pattern, shown in Fig. 23, as a fundamental, the whole fundamental pattern is not used as it is, but only a region of about 1/4, that is, a region surrounded by an alternate long and short dash line 44 in Fig. 29 is used and the light emission part 22 is arranged in a position corresponding to a central point of the fundamental pattern. In addition, while illustration of a part of the deflection patterns 34 is omitted in Fig. 29, the deflection patterns 34 is provided in a whole interior of the alternate long and short dash line 44 in case of being used as a light conductive plate 23.

Here, the respective numbers Na, Nb of the clockwise spirals 35 and the counterclockwise spirals 36 in the whole arrangement pattern as shown in Fig. 29 are found to be
Number Na of clockwise spirals 35 = 21
Number Nb of counterclockwise spirals 36 = 34
In contrast, the respective numbers Na, Nb of the clockwise spirals 35 and the counterclockwise spirals 36 within the alternate long and short dash line 44 shown in Fig. 29 are found to be
Number Na of clockwise spirals 35 = 5

Number Nb of counterclockwise spirals 36 = 9
A ratio of the number Na of clockwise spirals 35 and the number Nb of counterclockwise spirals 36 is
Na/Nb = 0.617 in the whole arrangement pattern in Fig. 29, and
Na/Nb = 0.556 within the alternate long and short dash line 44 in Fig. 29. Generally, a ratio of the number Na of clockwise spirals 35 and the number Nb of counterclockwise spirals 36 for the whole fundamental pattern and a partial region of the whole fundamental pattern meets

$$0.55 < Na/Nb < 0.75 \qquad\qquad (9)$$

In particular, the ratio in a region fairly distant from the central point meets

$$0.61 < Na/Nb < 0.63 \qquad\qquad (10)$$

[Embodiment 2]

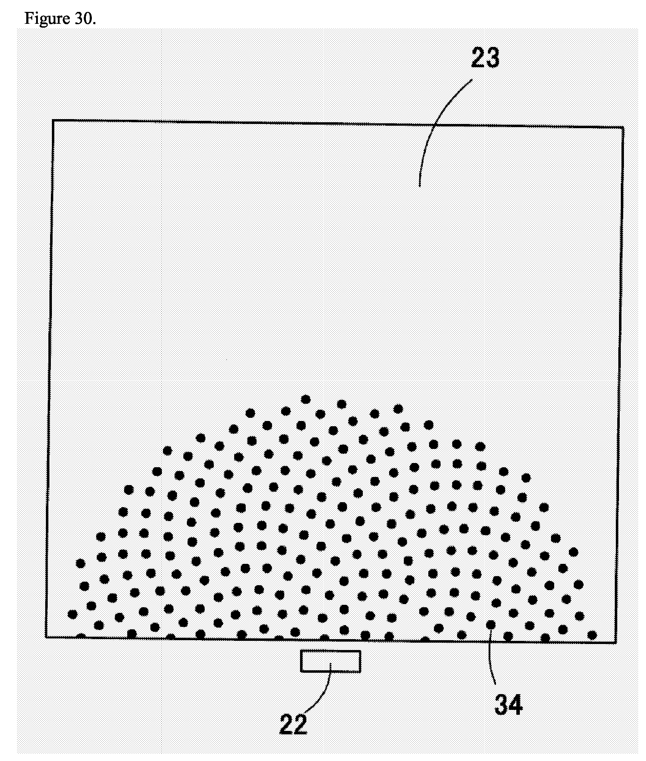

Fig. 30 is a schematic plan view showing a surface light source equipment according to Embodiment 2 of the invention. The surface light source equipment comprises a light emission part 22 arranged in opposition to a center of a side of a light conductive plate 23. Deflection patterns 34 are formed on a back surface of the light conductive plate 23. In addition, while Fig. 30 shows only a part of the deflection patterns 34, the deflection patterns are formed in a whole surface emission region on the lower surface of the light conductive plate 23.

A pattern, in which the deflection patterns 34 are arranged, in the surface light source equipment corresponds to a region of substantially 1/2 of the uniform fundamental pattern shown in Fig. 23, and the light emission part 22 is arranged in a central point of the fundamental pattern.

[Embodiment 3]

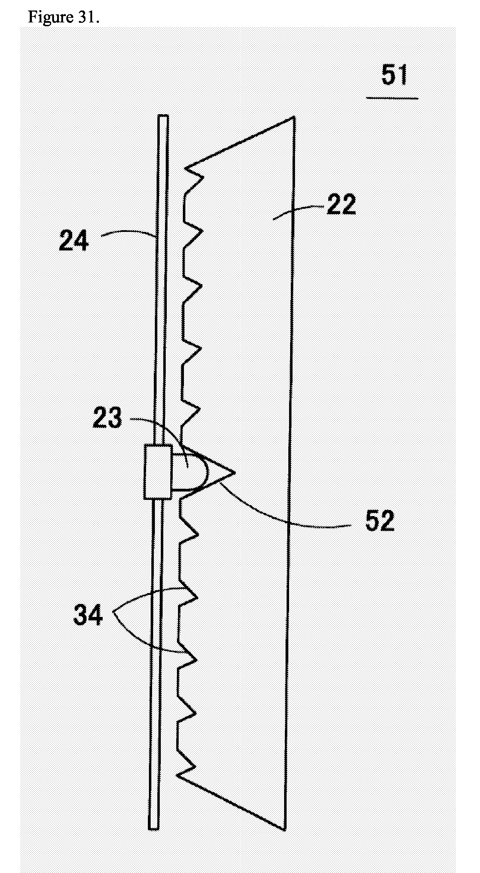

Fig. 31 is a cross sectional view showing a surface light source equipment 51 according to Embodiment 3 of the invention, and Fig. 32 is a back view showing a light conductive plate 23. The surface light source equipment is used as an illuminating lamp for indoor lighting lights, photographing lights, etc., and comprises uniform patterns, shown in Fig. 23, formed on a whole back surface of the disk-shaped light conductive plate 23, a conical-shaped recess 52 for a light source, formed centrally of the patterns, and a light emission part 22 composed of LED, etc. received in the recess 52 for a light source. Moreover, a reflection sheet 24 is arranged on the whole back surface of the light conductive plate 23.

With such surface light source, deflection patterns 34 can be evenly arranged on the circular light conductive plate 23 without a clearance to enable uniform light emission. Such surface light source is

[Embodiment 4]

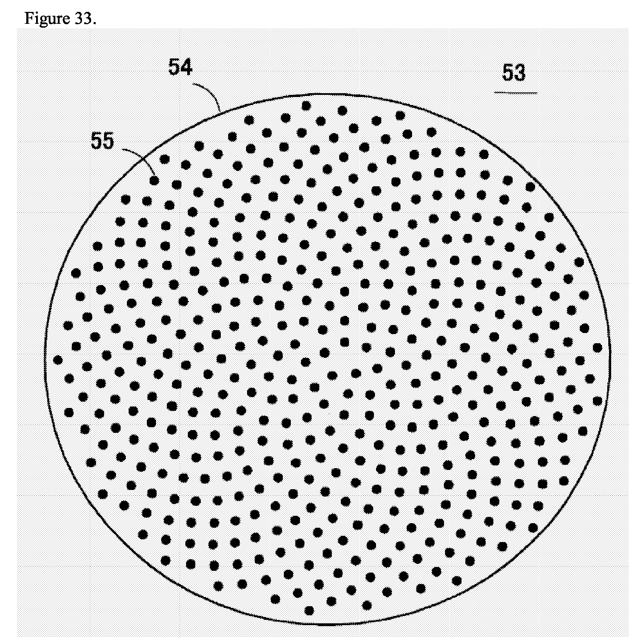

Fig. 33 is a front view showing a surface light source equipment 53 according to Embodiment 4 of the invention. With the surface light source 53, a plurality of, or a multiplicity of light emission parts 55 such as LED are arranged on a surface of a printed circuit board 54 in the form of a disk. The light emission parts 55 are arranged in arrangement points of a uniform fundamental pattern as shown in Fig. 23. That is, assuming that an origin of polar coordinates is positioned in a center of the printed circuit board 54, a m-th light emission part 55 is arranged so as to meet

$$Rm = Rm-1 + (1/Rm-1)$$

$$\theta m = \theta m-1 + \theta g \qquad\qquad (m = 1, 2, ...)$$

While it suffices that, for example, Ro = 1 and $\theta$o = 0°, Ro and $\theta$o may assume optional values provided that Ro > 0.
With such surface light source 53, the number of the light emission parts 55 arranged per unit area can be made constant and the light emission parts 55 can be arranged without deviation, so that it is possible to make inplane light intensity uniform and besides the light emission parts are seen visually beautiful. Also, since any deflection patterns 34 are not used, the construction can be made simple and is suited to the case where light emission parts 55 (LED) having a fixed magnitude are provided, and a use, in which a large quantity of light is needed. The surface light source is also used as an illuminating lamp for indoor lighting lights, photographing lights, etc.

[Embodiment 5]

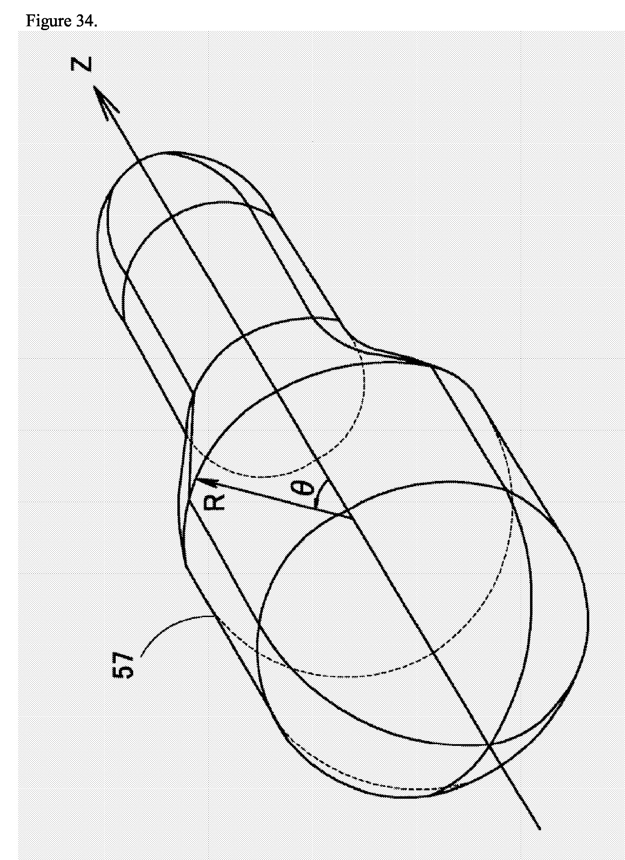

Fig. 34 is a perspective view showing a surface light source equipment 56 according to Embodiment 5 of the invention. The surface light source equipment 56 comprises a plurality of, or a multiplicity of light emission parts (LED) arranged on a surface of a solid configuration 57, which comprises a solid light emission body to be rotationally symmetric round an axis z of rotation.

Cylindrical coordinates (R, θ, Z) are used, a Z axis is taken in an axis of rotation of the solid configuration 57, and R indicates a distance from the Z axis in a direction of radius vector. Also, it is assumed that a profile of the solid configuration 57 is represented by

$$R = Rs (Z)$$

In the embodiment, a m-th light emission part on the surface of the solid configuration 57 is arranged in a position ($Rm$, $θm$, $Zm$) defined by the following formula

$$Zm = Zm-1 + (1/Rs(Zm-1))$$

$$Rm = Rs (Zm)$$

$$θm = θm-1 + θg \qquad (m = 1, 2, ...)$$

According to the embodiment, a plurality of light emission parts (light sources) can be arranged uniformly on a surface of a body of revolution. However, $Zo = 0$, $θo = 0°$, and $Ro > 0$.

Subsequently, an explanation will be given to applications of the invention.

(Liquid-crystal display)

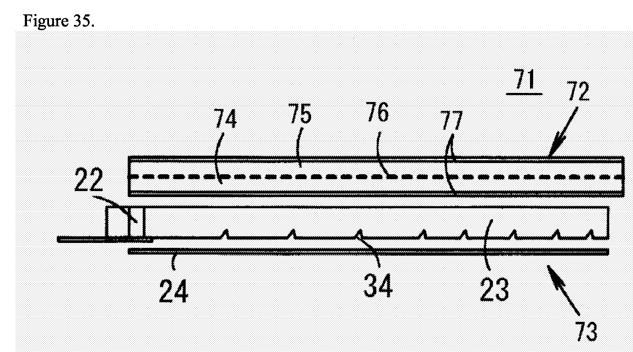

Fig. 35 is a schematic, cross sectional view showing a liquid-crystal display 71 according to the invention. The liquid-crystal display 71 comprises a surface light source equipment 73 arranged on a back surface of a liquid-crystal display panel 72. The liquid-crystal display panel 72 comprises a liquid-crystal layer 76 interposed and sealed between a back surface side substrate 74, on which switching elements, such as TFT (thin film transistor) and wiring are formed, and a front surface side substrate 75, on which a transparent electrode and a color filter are formed, and polarizing plates 77 overlapped on both front and back surfaces. With the liquid-crystal display 71, the surface light source equipment 73 is lighted to irradiate the liquid-crystal display panel 72 from a back surface side to ON and OFF control respective pixels of the liquid-crystal display panel 72, thus generating an image.

In addition, since the surface light source equipment according to the invention can be applied to a front light, it can also be used for a reflection type liquid-crystal display although not shown.

(Application)

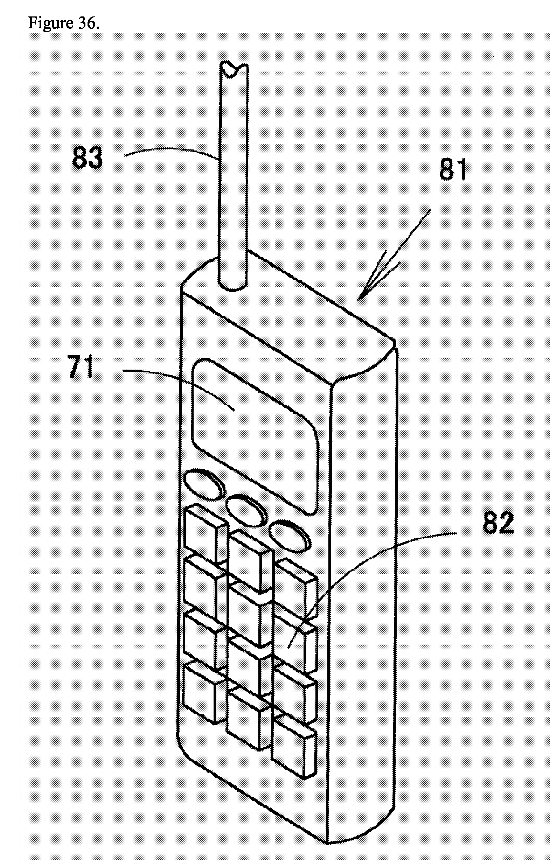

Fig. 36 shows a portable telephone 81, into which the liquid-crystal display 71 according to the invention is assembled. With the portable telephone 81, the liquid-crystal display 71 is assembled as a display onto a dial part 82 provided with ten keys, etc., and an antenna 83 is provided on an upper surface thereof.

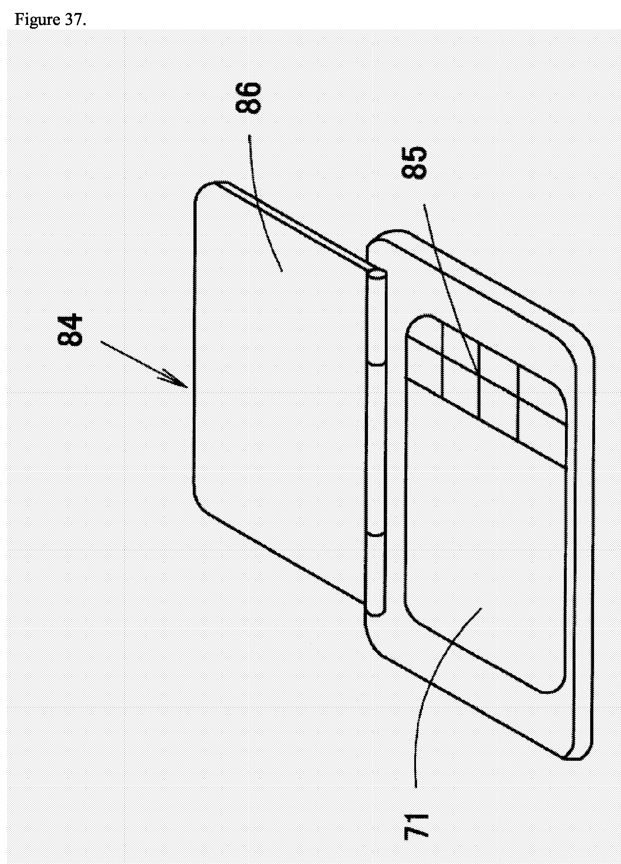

Fig. 37 shows a portable information terminal 84, such as PDA, into which the liquid-crystal display 71 according to the invention is assembled as a display. The portable information terminal 84 comprises an input unit 85 for pen input, etc., provided laterally of the liquid-crystal display 71, and a lid 86 pivotally mounted to an upper end thereof.

By using the liquid-crystal display 71 of the invention for the portable telephone 81, the portable information terminal 84, etc. in this manner, the surface light source equipment is caused to emit light uniformly, and generation of glitter on a screen is prevented, thus enabling an improvement in image quality.

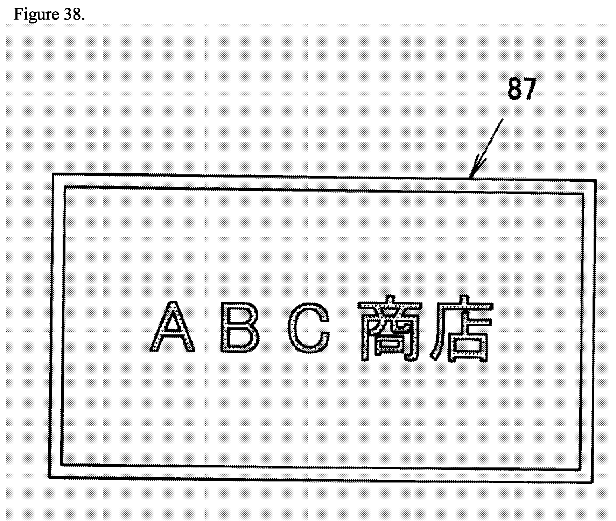

Also, Fig. 38 shows a display unit (illumination board) 87, in which the surface light source 53 according to Embodiment 4 is used. With the surface light source 53 according to Embodiment 4, respective light emission parts having different luminescent colors can be aligned, so that use as an illumination board is enabled by aligning the light emission parts, which have different luminescent colors, so as to provide for optional patterns and designs and exercising electronic control on light emission timings of the respective light emission parts. With such display unit 87, a color display having a uniform display surface can be fabricated without the use of a liquid-crystal display panel.

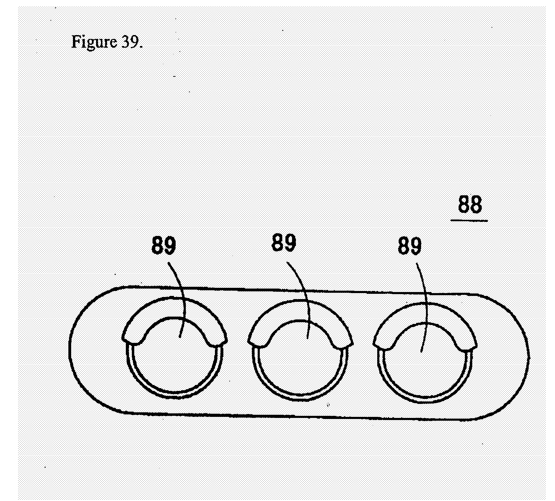

Also, Fig. 39 shows an electric signal 88, in which the surface light source equipment according to Embodiment 3 or Embodiment 4 is used as red, green, and blue signal lamps 89. That is, the surface light source equipment can be used for the signal lamps 89 by using a red light emission part, a green light emission part, and a blue light emission part as light emission parts.

[Industrial Applicability]

The surface light source equipment according to the invention is usable as a back light and a front light for liquid-crystal display panels, etc., or illuminating lamp, etc.

**Claims**

1. A surface light source equipment comprising a plurality of light sources arranged on a two-dimensional or a three-dimensional surface,
   **characterized in that** the light sources in respective positions are arranged regularly in two directions, and
   the direction of arrangement and intervals of the light sources are gradually varied according to movements along the direction of arrangement.

2. The surface light source equipment according to claim 1, wherein a connection line connecting between the light sources is rotationally symmetric round a certain point,
   the direction of arrangement and intervals of the light sources are gradually varied according to a distance from the central point, and
   two directions of arrangement in a position among respective points are non-symmetrical about a line segment, which connects between the position and the central point.

3. A surface light source equipment comprising a plurality of light sources arranged on a two-dimensional or a three-dimensional surface,
   **characterized in that** the light sources in respective positions are arranged regularly in two directions,
   a connection line connecting between the light sources in a direction of arrangement makes a spiral round a certain point, and
   $0.55 < Na/Nb < 0.75$ is met where Na and Nb (however, Na < Nb) indicate numbers of two kinds of spirals, which are different in sense.

4. The surface light source equipment according to claim 1, wherein the number of the light sources arranged per unit area is substantially constant irrespective of a point.

5. The surface light source equipment according to claim 3, wherein the number of the light sources arranged per unit area is substantially constant irrespective of a point.

6. The surface light source equipment according to claim 1, wherein the light sources are arranged in a circular region.

7. The surface light source equipment according to claim 3, wherein the light sources are arranged in a circular region.

8. The surface light source equipment according to claim 1, further comprising an actual light source and a light conductive plate, by which light introduced from the actual light source is spread over substantially a whole of a light outgoing surface to outgo from the light outgoing surface,
   wherein a quasi-light source, which can be regarded as the light sources, is arranged on the light conductive plate.

9. The surface light source equipment according to claim 3, further comprising an actual light source and a light conductive plate, by which light introduced from the actual light source is spread over substantially a whole of a light outgoing surface to outgo from the light outgoing surface,

wherein a quasi-light source, which can be regarded as the light sources, is arranged on the light conductive plate.

10. The surface light source equipment according to claim 8, further comprising a plurality of patterns provided on a surface of the light conductive plate opposite to the light outgoing surface to reflect a light conducted in the light conductive plate,

wherein the patterns form the quasi-light source.

11. The surface light source equipment according to claim 9, further comprising a plurality of patterns provided on a surface of the light conductive plate opposite to the light outgoing surface to reflect a light conducted in the light conductive plate,

wherein the patterns form the quasi-light source.

12. The surface light source equipment according to claim 8, wherein the actual light source is small as compared with the light conductive plate, and

the quasi-light source is shaped to be long in one direction, and arranged to be concentric about the central point of the light sources as arranged.

13. The surface light source equipment according to claim 9, wherein the actual light source is small as compared with the light conductive plate, and

the quasi-light source is shaped to be long in one direction, and arranged to be concentric about the central point of the light sources as arranged.

14. A surface light source equipment comprising a plurality of light sources arranged two-dimensionally,

wherein a m-th light source (m = 1, 2, ...) is arranged at a point $(R_m, \theta_m)$ or in the vicinity thereof, the point being determined by

$$Rm = Rm-1 + (1/Rm-1)$$

$$\theta m = \theta m-1 + \theta g$$

where R indicates a distance from a certain point, $\theta$ indicates an angle measured from a certain direction passing through the point, and coordinates $(R, \theta)$ represent a position of the light source, and where $R_o$ assumes an optional, positive value, $\theta_o$ assumes an optional value, and $\theta g \approx 137.5°$.

15. An image display unit comprising the surface light source equipment according to claims 1 to 14, and an image display panel arranged to overlap the surface light source equipment.

16. A portable telephone comprising the surface light source equipment according to claims 1 to 14.

17. A signal using the surface light source equipment according to claims 1 to 14.

18. An illumination board using the surface light source equipment according to claims 1 to 14.

19. A lighting system using the surface light source equipment according to claims 1 to 14.

Figure 1.

Figure 2.

Figure 3.

Figure 4.

Figure 5.

Figure 6.

Figure 7.

EMISSION INTENSITY

Figure 8.

Figure 9.

Figure 10.

Figure 11.

Figure 12.

Figure 13.

Figure 14.

Figure 15.

EP 1 688 661 A1

Figure 16.

Figure 17.

29

EP 1 688 661 A1

Figure 18.

Figure 19.

Figure 20.

Figure 21.

Figure 22.

Figure 23.

Figure 24.

Figure 25.

Figure 26.

Figure 27.

Figure 28.

Figure 29.

Figure 30.

Figure 31.

Figure 32.

Figure 33.

Figure 34.

Figure 35.

Figure 36.

Figure 37.

Figure 38.

Figure 39.

<div align="center">

**INTERNATIONAL SEARCH REPORT**

</div>

| | International application No. |
|---|---|
| | PCT/JP2004/016873 |

**A. CLASSIFICATION OF SUBJECT MATTER**
Int.Cl⁷ F21S2/00, F21V8/00, F21Y101:02, G09F9/00, G02F1/13357, G02B6/00

According to International Patent Classification (IPC) or to both national classification and IPC

**B. FIELDS SEARCHED**

Minimum documentation searched (classification system followed by classification symbols)
Int.Cl⁷ F21S2/00, F21V8/00, F21Y101:02, G09F9/00, G02F1/13357, G02B6/00

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 08-146223 A  (Kabushiki Kaisha Asa),<br>07 June, 1996 (07.06.96),<br>Page 2, right column, line 37 to page 3, left column, line 5; page 4, left column, line 25 to right column, line 19; Figs. 1 to 2, 6<br>(Family: none) | 1,8,10,15,19<br>6,12,16-18<br>4 |
| Y | JP 2003-57448 A  (Shinyei Kabushiki Kaisha),<br>26 February, 2003 (26.02.03),<br>Page 3, left column, line 42 to right column, line 30; Figs. 1 to 2<br>(Family: none) | 6 |

☒ Further documents are listed in the continuation of Box C.  ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>07 February, 2005 (07.02.05) | Date of mailing of the international search report<br>01 March, 2005 (01.03.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/016873 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-296425 A (Enplas Corp.),<br>09 October, 2002 (09.10.02),<br>Page 7, left column, line 40 to page 8, left<br>column, line 2; Figs. 7 to 8<br>& US 2002/145686 A1 | 12 |
| Y | JP 2001-243822 A (Omron Corp.),<br>07 September, 2001 (07.09.01),<br>Page 19, right column, line 35 to page 20, left<br>column, line 8; Fig. 84<br>(Family: none) | 16 |
| Y | JP 2002-94129 A (Omron Corp.),<br>29 March, 2002 (29.03.02),<br>Page 25, left column, line 41 to right column,<br>line 39; page 29, right column, lines 2 to 10;<br>Figs. 93, 130<br>& WO 01/63347 A1      & EP 1260853 A1<br>& US 2003/128538 A1 | 17-18 |
| A | WO 2002/89222 A1 (Moriyama Sangyo Kabushiki<br>Kaisha),<br>07 November, 2002 (07.11.02),<br>Page 96, line 19 to page 97, line 2; Fig. 76<br>(Family: none) | 2,3,5,7,9,<br>11,13-14 |
| A | JP 2001-273805 A (Sharp Corp.),<br>05 October, 2001 (05.10.01),<br>Fig. 1<br>(Family: none) | 4 |
| A | Microfilm of the specification and drawings<br>annexed to the request of Japanese Utility<br>Model Application No. 168283/1983(Laid-open<br>No. 75907/1985)<br>(Koito Manufacturing Co., Ltd.),<br>28 May, 1985 (28.05.85),<br>Full text; all drawings<br>(Family: none) | 14 |

Form PCT/ISA/210 (continuation of second sheet) (January 2004)

## INTERNATIONAL SEARCH REPORT

| International application No. |
|---|
| PCT/JP2004/016873 |

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:

    The matter in independent claim 1 is not clearly novel as is disclosed in
international-search-referred document JP 08-146223 A (Kabushiki Kaisha Asa),
07 June, 1996 (07.06.96), page 2, right column, line 37 to page 3, left column,
line 5, page 4, left column, line 25 to right column, line 19, Figs. 1 to
2, 6.  Consequently the common matter is not a special technical feature within
the meaning of PCT Rule 13.2, second sentence, since the matter common to
independent claims 1, 3, 14 makes no contribution over the prior art.
    Therefore, since independent claims 1, 3, 14 are not technically linked
as is described in PCT Rule 13.2, these inventions do not clearly fulfill
the requirement of unity.        (Continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest.

                            ☐ No protest accompanied the payment of additional search fees.

Form PCT/ISA/210 (continuation of first sheet (2)) (January 2004)

**INTERNATIONAL SEARCH REPORT**

| International application No. |
| --- |
| PCT/JP2004/016873 |

Continuation of Box No.III of continuation of first sheet(2)

Although claim 2 describes that "a connecting line is rotation-symmetric with a certain one point as the center", the connecting line in Fig.19, for example, itself is not rotation-symmetric and the meaning of that description is unclear.

Accordingly, the international search report is prepared assuming that the above description means a matter that "a plurality of connecting lines" described in [0045] and Fig.19 "is rotation-symmetric with a certain one point as the center".

Form PCT/ISA/210 (extra sheet) (January 2004)